# FASCICULE DE BREVET EUROPEEN

(11) **EP 2 925 827 B1**
(45) Date de publication et mention de la délivrance du brevet: **14.11.2018**
(21) Numéro de dépôt: 13808123.7
(22) Date de dépôt: 28.11.2013
(51) Int. Cl.: C09K 3/32, B01J 20/10, B01J 20/24

(54) **COMPOSITION POLYVALENTE DE DÉPOLLUTION ET SON UTILISATION**
POLYVALENTE ZUSAMMENSETZUNG ZUR ENTFERNUNG VON VERSCHMUTZUNGEN UND VERWENDUNG DAVON
POLYVALENT POLLUTION REMOVAL COMPOSITION AND USE THEREOF

(30) Priorité: 28.11.2012 FR 1261359
(43) Date de publication de la demande: 07.10.2015
(73) Titulaire: PREVOR INTERNATIONAL, 75015 Paris (FR)
(72) Inventeur: NEEL, Mathilde, 95430 Butry (FR); MATHIEU, Laurence, F-33400 Talence (FR); BLOMET, Joël, F-95760 Valmondois (FR); MEYER, Marie-Claude, F-75015 Paris (FR)
(74) Mandataire: Cabinet Plasseraud
(86) Numéro de dépôt international: PCT/FR2013/052890
(87) Numéro de publication internationale: WO 2014/083286

(56) Documents cités:
- WO-A1-82/04271
- US-A- 3 354 886
- US-A1- 2003 191 226
- US-B1- 6 911 189

## Description

### Domaine d'invention

La présente invention est relative à une composition de dépollution et son utilisation pour lutter contre les pollutions chimiques provoquées par des déversements intempestifs de liquides de toutes sortes.

De nos jours, nous sommes de plus en plus exposés aux pollutions chimiques, dans notre environnement, dans notre alimentation et au travail.

En cas d'accident, ces polluants chimiques posent potentiellement des problèmes de pollution et de sécurité à différentes échelles. Par exemple, un accident routier d'un camion transportant des matières premières toxiques ou dangereuses peut provoquer une pollution environnementale ou des dégâts sur la route. Dans l'industrie ou dans le laboratoire, une erreur de manipulation d'un bidon contenant une matière première toxique ou dangereuse peut provoquer des blessures du personnel ou l'endommagement de dispositifs. Ainsi la maîtrise rapide des pollutions est primordiale dans de nombreuses situations. Dans ces cas d'urgence, il est préférable de disposer d'un produit applicable à tout type de produits.

### L'art antérieur

De nombreuses compositions polyvalentes sont utilisées pour lutter contre des pollutions chimiques.

Des minéraux naturels desséchés, tels que la sépiolite, la terre de diatomée, le sable, la vermiculite ont été utilisés conventionnellement. Ces minéraux naturels sont non-toxiques, mais ils génèrent des quantités importantes de déchets à stocker ou à traiter.

La sciure de bois est aussi utilisée, mais elle réagit avec l'acide sulfurique pour former une huile noire collante, dont il est difficile de se débarrasser. Les compositions absorbantes comprenant de l'acide silicique amorphe (Chemizorb®) ont connu un important développement au cours de ces dernières années. Cependant, de grandes quantités de ces compositions sont nécessaires pour absorber le liquide et le produit résultant laisse une fine pellicule liquide sur le sol.

Une composition comprenant un polymère super absorbant et de la silice a aussi été mise sur le marché sous la marque Unisafe®. Cette composition n'implique pas de réaction dangereuse, cependant elle est assez coûteuse et le produit résultant laisse une fine pellicule de liquide sur le sol.

WO 82/04271 décrit un procédé de traitement d'un matériau fibreux, ledit matériau étant constitué de fibres de cellulose destinées à être compressées.

Ainsi, à ce jour, il n'existe pas de composition de dépollution:
(1) qui soit non irritante;
(2) qui permette une absorption des polluants liquides de tous types,
(3) qui ne soit pas nocive ou dangereuse lors de son utilisation,
(4) qui forme avec le polluant un résidu facile à ramasser, et
(5) qui ne laisse pas de résidu sur le sol, et
(6) qui permette une dépollution et un ramassage des résidus obtenus à un faible coût.

En effet, ces six critères peuvent être contradictoires. Or les présents inventeurs ont eu le mérite de trouver une composition de dépollution qui présentait un excellent compromis entre ces différents critères (1) - (6) .

### La présente invention

Ainsi l'invention porte une composition de dépollution, telle que définie dans le jeu de revendications, comprenant :
(a) au moins un gel de silice, et
(b) au moins un agent absorbant dérivé du bois, caractérisée en ce que ledit gel de silice a une granulométrie de 60 à 500 µm, de préférence de 120 à 400 µm, et plus préférentiellement encore de 150 à 300 µm, et une masse volumique de 150 à 400 kg/m³, de préférence de 200 à 380 kg/m³, et plus préférentiellement de 250 à 350 kg/m³.
La granulométrie est mesurée par tamisage à sec.

A la connaissance des inventeurs, une telle composition n'a jamais été divulguée par l'art antérieur.

Par « dépollution », on entend l'absorption complète des polluants chimiques et leur rétention.

La composition de la présente invention se présente sous une forme solide pulvérulente, elle peut donc facilement être épandue autour ou sur le liquide polluant.

Par « absorber », on entend amener à l'état solide le polluant se présentant initialement sous une forme liquide en le mélangeant avec la composition de dépollution.

Plus petite est la quantité nécessaire pour absorber le liquide polluant, plus efficace sera ladite composition.

Le résidu obtenu après l'application de ladite composition de l'invention sur le liquide ayant provoqué la pollution doit être facile à ramasser.

Par « facile à ramasser », on entend le fait que les caractéristiques du résidu obtenu sont telles qu'il n'y a pas de difficulté technique particulière lors de son ramassage, et que l'opération de ramassage peut être effectuée par des moyens couramment utilisés par un homme du métier. Ainsi, le résidu obtenu par utilisation de la composition selon l'invention n'est ni visqueux ni collant, et se présente sous une forme d'un gel solide, qui peut donc facilement être retiré sans laisser de résidu collé à la surface sur laquelle le liquide s'était répandu, par des moyens couramment utilisés par l'homme du métier, tels que par exemple à l'aide d'une pelle ou par aspiration, etc.

La composition de dépollution de la présente invention ne contient aucun ingrédient nocif, c'est-à-dire aucun ingrédient nécessitant un étiquetage particulier, tel que des nanoparticules, ou des composés irritants.

De plus, lors de son utilisation, la composition n'a pas d'effet nocif ou dangereux. Elle peut être manipulée sans risque. Quand elle entre en contact avec des polluants acides ou basiques, elle ne conduit pas à une réaction trop exothermique, c'est-à-dire à un niveau où l'élévation de température endommagerait le milieu environnant. Par ailleurs, il n'y a pas de dégagement de gaz toxique lié à la réaction de l'absorbant avec le produit chimique déversé.

Finalement, le coût total de la dépollution mettant en oeuvre la composition selon l'invention est faible. Il est à noter que le coût total de dépollution consiste non seulement en le coût des matières premières et de la fabrication de la composition, mais aussi en le coût des opérations de ramassage et de traitement des résidus (incinération notamment), d'où l'intérêt d'obtenir un déchet facile à ramasser et en quantité massique réduite. Or, de par sa grande capacité absorbante, la quantité de composition de dépollution utilisée pour lutter contre la pollution liquide est faible. C'est une quantité minime et donc une masse minime de déchet formé, qui devra être stocké et/ou traité.

### Composition

### (a) Gel de silice

Par « gel de silice », on entend un polymère de silice synthétique amorphe préparé à partir de silicate de sodium.

Le gel de silice est notamment connu comme un additif alimentaire dénommé E551.
Les grains de gel de silice sont poreux. Cette structure spécifique de gel de silice permet à la fois d'absorber le liquide à dépolluer et de donner un résidu non collant et facile à ramasser.

Les présents inventeurs ont trouvé qu'un gel de silice avec une granulométrie de 60 à 500 µm, de préférence de 120 à 400 µm, et plus préférentiellement de 150 à 300 µm, et une masse volumique de 150 à 400 kg/m³, de préférence de 200 à 380 kg/m³, et plus préférentiellement de 250 à 350 kg/m³, permet de donner la meilleure efficacité de dépollution.

Un tel gel de silice est commercialisé par exemple sous la marque Tixosil (notamment Tixosil 68®) produite par Rhodia, Upasil (notamment Upasil 60®) produite par Upagchem. On peut également utiliser du gel de silice pour chromatographie vendu par Aldrich, VWR, Accros. Tixosil 68® absorbe environ 3 fois son poids de liquide et est relativement peu coûteux. Upasil 60® absorbe environ 2 fois son poids en liquide. Les gels de silice pour chromatographie absorbent entre 1,5 et 2,5 fois leur poids suivant leur porosité.

Ledit gel de silice présente une capacité d'absorption de 1L à 10L pour 1 Kg, et de préférence de 2L à 4L pour 1 Kg.

### (b) Agent absorbant dérivé de bois

Par « agent absorbant dérivé de bois », on entend des produits naturels provenant du bois, de la paille ou du maïs, comprenant de la cellulose, de l'hémicellulose et/ou de la lignine.

Selon la présente invention, ledit agent absorbant dérivé de bois est choisi parmi la sciure de bois, les copeaux de bois, la poudre de bois, la paille broyée, le maïs broyé, de la cellulose, de l'hémicellulose, de la lignine et leurs mélanges.

A titre d'exemple d'agent absorbant dérivé du bois, on peut utiliser le produit commercialisé sous la marque Lignocel C250S®. Lignocel C250S® a une bonne capacité d'absorption et son coût est faible. 1Kg de Lignocel C250S® absorbe 10 à 20L de produit liquide.

Ce type de composé n'est pas irritant et ne dégage pas de gaz nocif lors de son utilisation. Il permet d'absorber avec efficacité tous types de liquides pour un coût très faible. En revanche, il a tendance à former une pâte collante au sol lors de dépollution, et notamment, il réagit avec l'acide sulfurique pour former une huile noire et collante, son utilisation seule n'est donc pas recommandée.

### (c) Additifs

En outre, la composition selon la présente invention peut éventuellement contenir au moins un additif choisi parmi les agents indicateurs de pH, les colorants et les parfums, les agents améliorant l'écoulement, les agents gonflants, etc. L'homme du métier est en mesure de choisir, parmi l'ensemble de ces additifs éventuels, aussi bien la composition que la quantité de ceux qui seront ajoutés à la composition, de telle sorte que celle-ci conserve l'ensemble de ses propriétés.

### Agent indicateur de pH

Par « agent indicateur de pH », on entend des composés qui ont la capacité de changer de couleur en fonction du pH de leur milieu environnemental.

Des exemples d'indicateurs de pH sont le bleu de thymol, la tropaeoline, le pourpre de bromocrésol, le bleu de bromophénol, le rouge de congo, le rouge neutre, la phénolphtaléine, le thymolphtaléine, le jaune d'alizarine R, le bleu de bromothymol, le rouge de crésol, le méthyle violet, le vert malachite, le jaune de méthyle, le rouge congo, le méthyle orange, le vert de bromocrésol, le rouge de méthyle, le rouge de phénol, l'alizarine, le carmin d'indigo et leurs mélanges.

Ainsi, dans un mode de réalisation particulier de la présente invention, la composition comprend en outre au moins un agent indicateur de pH choisi parmi le tropaeoline, le bleu de thymol, le pourpre de bromocrésol, le bleu de bromophénol, le rouge de congo, le rouge neutre, la phénolphtaléine, le thymolphtaléine, le jaune d'alizarine R, et leurs mélanges.

La présence d'agent indicateur de pH permet de vérifier rapidement le pH du résidu et de prendre les précautions nécessaires à la manipulation du résidu formé.

### Colorant

A titre d'exemple de colorant, on peut citer tout colorant dépourvu de toxicité, par exemple de qualité alimentaire. En particulier, on peut citer le bleu patenté V, la Carmoisine, la tartrazine, etc.

### Parfum

Les parfums peuvent être d'origine naturelle, tels que les huiles essentielles de fleurs, de fruits, l'écorce de bois (cannelle, santal), de la résine (encens, myrrhe), etc. On peut également utiliser des parfums synthétiques, tels que la vanilline.

### Agents d'écoulement

Afin de faciliter l'épandage de la composition selon l'invention, celle-ci peut inclure des agents d'écoulement. A titre d'exemples de tels agents, on peut citer du sable, de la tourbe, etc

### Agents gonflants

Afin d'augmenter la capacité d'absorption de solutions aqueuses, des polymères super-absorbants de type polyacrylate de sodium, polyacrylate de potassium ou polyamide ou des copolymères à bloc de ce type peuvent être ajoutés aux mélanges. A titre d'exemples de produits commerciaux utilisables, on peut citer Aquakeep®, Tramfloc ®, notamment.

Dans un mode de réalisation particulier de la présente invention, ledit gel de silice est présent en une quantité allant de 60 % à 95%, de préférence de 70% à 90%, et plus préférentiellement encore de 75% à 80% en poids par rapport au poids total de la composition.

Dans un mode de réalisation particulier de la présente invention, ledit absorbant dérivé de bois est présent en une quantité allant de 5% à 40%, de préférence de 10% à 30%, et plus préférentiellement encore de 15% à 20% en poids par rapport au poids total de la composition.

Selon la présente invention, le ratio massique du gel de silice à l'absorbant dérivé de bois est de 95/5 à 60/40, de préférence de 90/10 à 75/25, et plus préférentiellement encore d'environ 80/20.

Dans un mode particulier de la présente invention, ledit agent indicateur de pH est présent en une quantité allant de 0,001% à 0,1%, de préférence de 0,005% à 0,08%, et encore plus préférentiellement de 0,01% à 0,05% en poids par rapport au poids total de la composition.

Une composition selon l'invention comprend:
- 60 à 95%, de préférence 70 à 90% et plus préférentiellement encore de 75 à 80% de gel de silice, présentant une granulométrie de 60 à 400µm et une masse volumique de 200 à 400 kg/m³;
- 5 à 40%, de préférence de 10 à 30% et plus préférentiellement de 15 à 20% d'absorbant dérivé de bois;
- 0 à 2%, de préférence de 0,001 à 0,1% et plus préférentiellement de 0,05 à 0,5% d'au moins un additif, de préférence un agent indicateur de pH,
lesdits pourcentages étant exprimés en poids par rapport au poids total de la composition.

### Utilisation

L'invention porte également sur un procédé de dépollution mettant en oeuvre la composition selon l'invention.

Le procédé selon l'invention comprend les étapes suivantes :
1) ajouter la composition décrite précédemment sur le liquide ;
2) attendre jusqu'à l'absorption du liquide polluant par la composition;
3) éventuellement, vérifier le pH du résidu obtenu à l'étape 2);
4) répéter les étapes 1) à 3) jusqu'à l'absorption complètes du liquide et la formation d'un résidu solide; et
5) ramasser le résidu.

L'étape 1) peut être effectuée de différentes manières en fonction de l'échelle de pollution. Par exemple, s'il s'agit d'une pollution à l'échelle du laboratoire (de l'ordre de quelques centaines de mL), l'étape 1) peut être effectuée par un ajout de quelques dizaines de grammes de composition, autour ou sur le liquide polluant, tandis que quand il s'agit d'une pollution à une échelle plus importante (tel que renversement de camion transportant une matière première), l'étape 1) peut être effectuée par un versement, à l'aide par exemple d'un camion-benne, d'une lance de pompier, autour ou sur le liquide polluant.
Si la composition de l'invention comprend un indicateur de pH, la vérification de pH de l'étape 3) peut être faite visuellement. Les mesures nécessaires à la manipulation du résidu (port de gants, de lunettes) et aux conditions de stockage ou traitement final (hangar aéré, ensevelissement, etc.) peuvent donc être prises.

Une fois qu'un résidu solide est obtenu, le résidu est ramassé avec des moyens couramment utilisés par l'homme du métier, par exemple à l'aide d'une pelle ou par aspiration.

### Effet technique

La composition de dépollution selon l'invention permet d'absorber les liquides avec une utilisation de quantité minimum de produit et à un coût inférieur par rapport aux produits de l'état de la technique.

La capacité d'absorption d'un composé (ou de la composition de dépollution) est exprimée en L/Kg et correspond à la quantité en poids de composé (composition de dépollution) qu'il est nécessaire d'ajouter à 1L d'eau pour que le mélange résultant soit complètement transformé en une forme solide.
On peut donc la mesurer de la façon suivante :
1) 1L d'eau est mis dans un récipient, de préférence en verre;
2) Une quantité déterminée de la composition de la présente invention est ajoutée dans ledit récipient;
3) Une fois le mélange homogénéisé, l'état (liquide ou solide) du mélange est vérifié. Les étapes 1) et 2) sont répétées jusqu'à l'obtention d'un résidu solide;
4) La quantité en Kg de composition de dépollution ajoutée correspond à la capacité d'absorption de ladite composition en Kg/L.

Selon un mode de réalisation particulier de la présente invention, la composition selon l'invention présente une capacité d'absorption de 5L à 90L pour 1 Kg, de préférence de 10L à 70L pour 1 Kg, plus préférentiellement encore de 15L à 50L de ladite composition.

La composition de la présente invention n'est pas dangereuse (non toxique, non irritante, non allergisante, et non écotoxique), contrairement aux produits actuellement commercialisés. Elle ne contient pas non plus de nanoparticules, qui posent potentiellement des risques pour la santé.

Lors de l'utilisation, la composition de la présente invention ne provoque pas une élévation de température dommageable au milieu environnant, ou même si une élévation de température a lieu, celle-ci est bien moindre que les produits actuellement commercialisés.

Par ailleurs, le ramassage du résidu formé est facile et du fait de la quantité minimale de produit mise en oeuvre, son stockage et/ou traitement ultérieur, peut se faire à coût très raisonnable.

L'invention sera maintenant illustrée par les exemples non limitatifs suivants.

### EXEMPLES

Dans les exemples qui suivent, les produits commerciaux suivants sont utilisés:
Tixosil 68® : gel de silice commercialisé par Rhodia présentant une granulométrie de 200µm et une masse volumique de 300 kg/cm³.
Lignocel C250® : absorbant dérivé de bois, commercialisé par JRS pharma.
Sépiolite: Absorbant naturel argileux méditerranéen.
Unisafe®: Absorbant synthétique commercialisé par Okotec à base de silice et de polymère super absorbant.

### Exemple 1 :

### 1-1. Formulation

Une composition de dépollution XY027-01 a été préparée en mélangeant le Tixosil 68® et le Lignocel C250® dans un ratio massique de 80/20.
Puis, à ce mélange on a ajouté:

| | |
|---|---|
| Tropaeoline | 0,01 % |
| Bleu de thymol | 0,02 % |

les % sont des % en poids par rapport au poids du mélange Tixosil 68®/ Lignocel C250®.

### 1-2. Test d'absorption de liquide

Le test d'absorption a été effectué successivement avec les liquides polluants suivants: H₂SO₄ 98%, HNO₃ 100%, HNO₃ 65%, soude 50%, ammoniac 30%, eau, NaCl 0,9%, H2O2 40%, eau de javel 13%, Huile, HCl 5N, NaOH 5N, AcOEt, toluène, formol, acide formique, et EtOH, en utilisant d'une part la composition préparée ci-dessus et d'autre part, à des fins de comparaison, avec le sépiolite et Unisafe®, selon le protocole suivant :
1) 1L de liquide à dépolluer est mis dans un récipient en verre;
2) 100 g de la composition est ajoutée dans ledit récipient. Une fois le mélange homogénéisé, l'état (liquide ou solide) du mélange est vérifié.
3) Les étapes 1) et 2) sont répétées jusqu'à l'obtention d'un résidu solide.
4) Une fois un résidu solide est obtenu, ledit résidu est ramassé à la pelle.

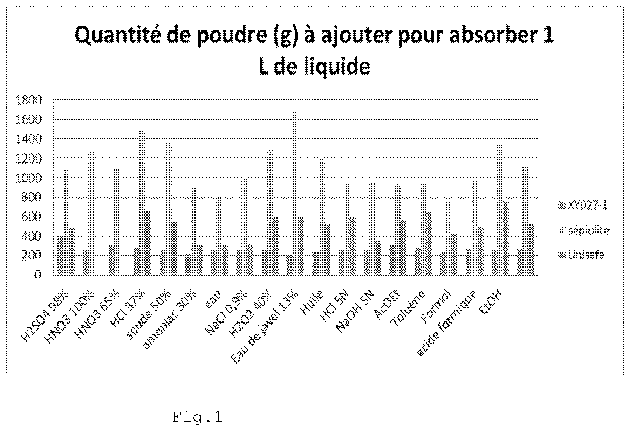

Les résultats du test d'absorption sont présentés sur la Figure 1.

Il est à noter que quelques soient les polluants et leurs concentrations, la composition de la présente invention a montré une meilleure efficacité d'absorption que les produits actuellement commercialisés.

Par ailleurs, le coût de traitement à l'aide de la composition selon l'invention par rapport au coût de traitement à l'aide des compositions actuellement commercialisées est abaissé considérablement. En moyenne, il est abaissé de plus de 50% par rapport au coût impliqué par l'utilisation du produit Unisafe, et de plus de 75% par rapport au coût impliqué par l'utilisation de la sépiolite.

En conclusion, la composition permet d'absorber différents polluants liquides à différentes concentrations en utilisant une quantité minimum du produit et à un coût inférieur à celui des produits actuellement commercialisés. De plus, la composition n'est pas dangereuse (non toxique, non irritante, non allergisante, et non écotoxique), contrairement à certains produits actuellement commercialisés.

## Revendications

1. Composition de dépollution comprenant :
(a) au moins un gel de silice, et
(b) au moins un agent absorbant dérivé du bois,
**caractérisée en ce que** ledit gel de silice a une granulométrie de 60 à 500 µm, de préférence de 120 à 400 µm, et plus préférentiellement encore de 150 à 300 µm, et une masse volumique de 150 à 400 kg/m³, de préférence de 200 à 380 kg/m³, et plus préférentiellement de 250 à 350 kg/m³ ;
ledit agent absorbant dérivé de bois étant choisi parmi la sciure de bois, les copeaux de bois, la poudre de bois, la paille broyée, le maïs broyé, la cellulose, l'hémicellulose, la lignine et leurs mélanges ; et
le ratio massique entre ledit gel de silice et ledit absorbant dérivé du bois étant de 95/5 à 60/40, de préférence de 90/10 à 75/25, et plus préférentiellement encore 80/20.

2. Composition selon la revendication 1, **caractérisée en ce que** ladite composition présente une capacité d'absorption de 5L à 90L pour 1 Kg de ladite composition, de préférence de 10L à 70L pour 1Kg de ladite composition, et plus préférentiellement de 15L à 50 L pour 1Kg de ladite composition.

3. Composition selon la revendication 1 ou 2, **caractérisée en ce que** ledit gel de silice présente une capacité d'absorption de 1L à 10L pour 1 Kg dudit gel de silice, de préférence de 2L à 4L pour 1Kg dudit gel de silice.

4. Composition selon l'une quelconque des revendications 1 à 3, **caractérisée en ce qu'**elle comprend en outre au moins un additif choisi parmi les agents indicateurs de pH, parfums, colorants, agents facilitant l'écoulement, agents gonflants, et leurs mélanges.

5. Composition selon la revendication 4, **caractérisée par le fait que** l'agent indicateur de pH est choisi parmi le tropaeoline, le bleu de thymol, le pourpre de bromocrésol, le bleu de bromophénol, le rouge de congo, le rouge neutre, la phénolphtaléine, le thymolphtaléine, le jaune d'alizarine R, et leurs mélanges.

6. Composition selon l'une quelconque des revendications 1 à 5, **caractérisée en ce que** ledit gel de silice est présent en une quantité allant de 60% à 95%, de préférence de 70% à 90%, et plus préférentiellement encore de 75% à 80% en poids total de la composition.

7. Composition selon l'une quelconque des revendications 4 à 6, **caractérisée en ce que** ledit agent indicateur de pH est présent en une quantité allant de 0,001% à 0,1%, de préférence de 0,005% à 0,08%, et encore plus préférentiellement de 0,01% à 0,05.

8. Composition selon l'une quelconque des revendications 4 à 7, comprenant:
- 60 à 95%, de préférence 70 à 90% et plus préférentiellement encore de 75 à 85% en poids du poids de la composition de gel de silice, de préférence présentant une granulométrie de 60 à 500 µm et une masse volumique de 150 à 400 kg/m³;
- 5 à 40%, de préférence de 10 à 30% et plus préférentiellement de 15 à 20% en poids du poids de la composition d'absorbant dérivé de bois;
- 0,001 à 2%, de préférence de 0,001 à 0,1% et plus préférentiellement de 0,05 à 0,5% en poids du poids de la composition d'au moins un additif, de préférence un agent indicateur de pH.

## Patentansprüche

1. Zusammensetzung zur Dekontaminierung, umfassend:
(a) wenigstens ein Kieselgel, und
(b) wenigstens ein aus Holz hergestelltes absorbierendes Mittel,
**dadurch gekennzeichnet, dass** das Kieselgel eine Korngröße von 60 bis 500 µm, bevorzugt von 120 bis 400 µm und stärker bevorzugt von 150 bis 300 µm aufweist sowie ein Volumengewicht von 150 bis 400 kg/m³, bevorzugt von 200 bis 380 kg/m³, und stärker bevorzugt von 250 bis 350 kg/m³;
wobei das aus Holz hergestellte absorbierende Mittel gewählt ist aus Holzspänen, Holzschnitzeln, Holzmehl, zerkleinertem Stroh, zerkleinertem Mais, Cellulose, Hemicellulose, Lignin und deren Mischungen; und
wobei das Massenverhältnis zwischen dem Kieselgel und dem aus Holz hergestellten absorbierenden Mittel 95/5 bis 60/40 beträgt, bevorzugt 90/10 bis 75/25 und stärker bevorzugt 80/20.

2. Zusammensetzung nach Anspruch 1, **dadurch gekennzeichnet, dass** die Zusammensetzung ein Absorptionsvermögen von 5 bis 90 l pro 1 kg Zusammensetzung aufweist, bevorzugt 10 bis 70 l pro 1 kg Zusammensetzung und stärker bevorzugt 15 bis 50 l pro 1 kg Zusammensetzung.

3. Zusammensetzung nach Anspruch 1 oder 2,
**dadurch gekennzeichnet, dass** das Kieselgel ein Absorptionsvermögen von 1 bis 10 l pro 1 kg Kieselgel aufweist, bevorzugt von 2 bis 4 l pro 1 kg Kieselgel.

4. Zusammensetzung nach einem der Ansprüche 1 bis 3, **dadurch gekennzeichnet, dass** sie ferner wenigstens einen Zusatzstoff umfasst, der gewählt ist aus pH-Indikatoren, Duftstoffen, Farbstoffen, Fließmitteln, Quellmitteln und deren Mischungen.

5. Zusammensetzung nach Anspruch 4, **dadurch gekennzeichnet, dass** der pH-Indikator gewählt ist aus Tropaeolin, Thymolblau, Bromokresolpurpur, Bromophenolblau, Kongorot, Neutralrot, Phenolphthalein, Thymolphtalein, Alizarin R-Gelb und deren Mischungen.

6. Zusammensetzung nach einem der Ansprüche 1 bis 5, **dadurch gekennzeichnet, dass** das Kieselgel in einer Menge von 60 bis 95 %, bevorzugt von 70 bis 90 % und noch stärker bevorzugt von 75 bis 80 % des Gesamtgewichts der Zusammensetzung vorliegt.

7. Zusammensetzung nach einem der Ansprüche 4 bis 6, **dadurch gekennzeichnet, dass** der pH-Indikator in einer Menge von 0,001 bis 0,1 %, bevorzugt von 0,005 bis 0,08 % und noch stärker bevorzugt von 0,01 bis 0,05 % vorliegt.

8. Zusammensetzung nach einem der Ansprüche 4 bis 7, umfassend:
- 60 bis 95 Gewichtsprozent, bevorzugt 70 bis 90 Gewichtsprozent und noch stärker bevorzugt 75 bis 85 Gewichtsprozent des Gewichts der Kieselgel-Zusammensetzung, bevorzugt mit einer Korngröße von 60 bis 500 µm und einem Volumengewicht von 150 bis 400 kg/m³;
- 5 bis 40 Gewichtsprozent, bevorzugt 10 bis 30 Gewichtsprozent und noch stärker bevorzugt 15 bis 20 Gewichtsprozent des Gewichts des aus Holz hergestellten absorbierenden Mittels;
- 0,001 bis 2 Gewichtsprozent, bevorzugt 0,001 bis 0,1 Gewichtsprozent und noch stärker bevorzugt 0,05 bis 0,5 Gewichtsprozent des Gewichts des wenigstens einen Zusatzstoffes, bevorzugt eines pH-Indikators.

## Claims

1. Decontamination composition comprising:
(a) at least one silica gel, and
(b) at least one wood derivative absorbing agent, **characterised in that** said silica gel has a grain size of 60 to 500µm, preferably of 120 to 400µm, and more preferably still, of 150 to 300µm, and a density of 150 to 400kg/m³, preferably of 200 to 380kg/m³, and more preferably, of 250 to 350kg/m³;
said wood derivative absorbing agent being selected from among wood sawdust, wood shavings, wood powder, chopped straw, ground maize, cellulose, hemicellulose, lignin and the mixtures thereof; and
the mass ratio between said silica gel and said wood derivative absorbing agent being of 95/5 to 60/40, preferably of 90/10 to 75/25, and more preferably still, 80/20.

2. Composition according to claim 1, **characterised in that** said composition has an absorption capacity of 5L to 90L per 1kg of said composition, preferably of 10L to 70L per 1kg of said composition, and more preferably, of 15L to 50L per 1kg of said composition.

3. Composition according to claim 1 or 2, **characterised in that** said silica gel has an absorption capacity of 1L to 10L per 1kg of said silica gel, preferably of 2L to 4L per 1kg of said silica gel.

4. Composition according to any one of claims 1 to 3, **characterised in that** it further comprises at least one additive selected from among pH indicator agents, perfumes, colourants, agents facilitating flow, swelling agents, and the mixtures thereof.

5. Composition according to claim 4, **characterised by** the fact that the pH indicator agent is selected from among tropaeolin, thymol blue, bromocresol purple, bromophenol blue, congo red, neutral red, phenolphthalein, thymolphthalein, alizarine yellow R, and the mixtures thereof.

6. Composition according to any one of claims 1 to 5, **characterised in that** said silica gel is present in a quantity going from 60% to 95%, preferably from 70% to 90%, and more preferably still, from 75% to 80% by total weight of the composition.

7. Composition according to any one of claims 4 to 6, **characterised in that** said pH indicator agent is present in a quantity going from 0.001% to 0.1%, preferably from 0.005% to 0.08%, and more preferably still, from 0.01% to 0.05%.

8. Composition according to any one of claims 4 to 7, comprising:
- 60 to 95%, preferably 70 to 90%, and more preferably still, 75 to 85% by weight of the weight of the silica gel composition, preferably having a grain size of 60 to 500µm and a density of 150 to 400kg/m³;
- 5 to 40%, preferably 10 to 30%, and more preferably, 15 to 20% by weight of the weight of the wood derivative absorbing agent composition;
- 0.001 to 2%, preferably 0.001 to 0.1%, and more preferably, 0.05 to 0.5% by weight of the weight of the composition of at least one additive, preferably a pH indicator agent.
